(19) Europäisches Patentamt European Patent Office Office européen des brevets

(11) **EP 4 675 265 A1**

(12) **EUROPEAN PATENT APPLICATION**
published in accordance with Art. 153(4) EPC

(43) Date of publication:
**07.01.2026 Bulletin 2026/02**

(21) Application number: **24763609.5**

(22) Date of filing: **14.02.2024**

(51) International Patent Classification (IPC):
**G01N 23/046** *(2018.01)* **G01N 23/083** *(2018.01)*

(52) Cooperative Patent Classification (CPC):
**G01N 23/046; G01N 23/083**

(86) International application number:
**PCT/JP2024/004999**

(87) International publication number:
**WO 2024/181126 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2023 JP 2023028211**

(71) Applicant: **Nishikawa, Yukihiro**
**Kyoto-shi, Kyoto 603-8344 (JP)**

(72) Inventor: **Nishikawa, Yukihiro**
**Kyoto-shi, Kyoto 603-8344 (JP)**

(74) Representative: **Global IP Europe**
**Patentanwaltskanzlei**
**Pfarrstraße 14**
**80538 München (DE)**

(54) **OPTICAL ABSORPTION COEFFICIENT CALCULATION DEVICE AND OPTICAL ABSORPTION COEFFICIENT CALCULATION PROGRAM**

(57)    Provided is an optical absorption coefficient calculation technique capable of calculating an optical absorption coefficient of any part of an object at high speed. An optical absorption coefficient calculation device A includes a global coordinate transform operator determination unit 3 that determines a global coordinate transform operator for transforming a specific coordinate in a specific region into a global coordinate value, a rotational transform operator determination unit 4 that determines a rotational transform operator for transforming the global coordinate value into a coordinate after relative rotation, a detector coordinate value determination unit 5 that determines a detector coordinate value based on a coordinate acquired by applying the global coordinate transform operator and the rotational transform operator to the specific coordinate, a convolution operation unit 6 that performs convolution operation with a filter function on transmission projection data, and an integration unit 7 that calculates the optical absorption coefficient of the specific coordinate by acquiring a calculated value of the convolution operation calculated based on the transmission projection data of the detector coordinate value for each rotation angle and accumulating the calculated value.

[FIG. 1]

EP 4 675 265 A1

**Description**

Technical Field

The present invention relates to a technique of calculating an optical absorption coefficient of each part of an object from transmission projection data of X rays applied to the object.

Background Art

As a technology for investigating the internal structure of an object, CT (Computed Tomography) has been used. In CT, an object is arranged between an X ray source and a detector, and the object is relatively rotated, thereby acquiring (taking an image of) transmission projection data from a plurality of directions. From these plurality of pieces of transmission projection data, an optical absorption coefficient of a part of the object is calculated, and a tomographic image or the like is generated based on that optical absorption coefficient.

As one method for calculating an optical absorption coefficient from transmission projection data, an FBP (Filtered Back Projection) method has been known. In the FBP method, theoretically, an optical absorption coefficient at coordinates (x, y) of a sectional image f of an object can be calculated with the following equation. Here, p is transmission projection data, r is the coordinate of the transmission projection data, $\theta$ is a relative rotational angle of the object, and R is a filter.

[Equation 1]

$$f(x,y) = \frac{1}{2\pi} \int_0^\pi \left\{ \int_{-\infty}^\infty \left[ \int_{-\infty}^\infty p(r,\theta) e^{-irR} dr \right] |R| \, e^{i(x\cos\theta + y\sin\theta)R} dR \right\} d\theta \cdots (1)$$

As can be found from Equation (1), to calculate an optical absorption coefficient corresponding to one pixel, triple integral is required, and thus, to calculate an optical absorption coefficient of an entire two-dimensional tomographic image, quintet integral is required, and the calculation amount is enormous. To reduce this calculation amount, a method called a convolution integral method has been proposed. From Equation (1), it can be found that an optical absorption coefficient is calculated by Fourier transformation of transmission projection data p, multiplication in Fourier space (filtering process), and inverse Fourier transformation. In the convolution integral method, attention is paid to the fact that multiplication in Fourier space is equivalent to convolution operation (filtering process) in real space, and Equation (1) is transformed as in Equation (2). In Equation (2), with a single convolution operation and a single integration, the calculation equivalent to Equation (1) can be performed with a less calculation amount.

[Equation 2]

$$f(x,y) = \frac{1}{2\pi} \int_0^\pi p(r,\theta) \otimes k(r) d\theta \cdots (2)$$

Also, a speed-enhancement technique when the light source is of fan beams or corn beams has been also proposed. For example, in the technique of Patent Literature 1, data axially projected on a linear projection axis from a transmission projection image by fan beams is calculated, back projection pixel data is calculated from the axially-projected data, and an optical absorption coefficient (pixel value) of each pixel of a tomographic image is calculated from the back projection pixel data. With this, simplification and speed enhancement of back projection process can be achieved.

Furthermore, in the technique of Patent Literature 2, in a process of calculating an optical absorption coefficient (pixel value) of each pixel of a tomographic image from a transmission projection image by corn beams, a convolution weighting factor, a back projection weighting factor, the coordinate position on the back projection data on a projection image, and an interpolation coefficient are retained on a table in advance in accordance with the imaging geometry conditions, and an optical absorption coefficient is calculated by using these. With this, the calculation process is reduced, and speed enhancement can be achieved.

Citation List

Patent Literatures

Patent Literature 1: Japanese Unexamined Patent Application Publication No. 2003-245276
Patent Literature 2: Japanese Unexamined Patent Application Publication No. 2007-068717

Summary of Invention

Technical Problem

In the convolution integral method and the techniques of Patent Literatures 1 and 2, the speed of the process can be enhanced under a specific condition, specifically, when the tomographic plane is orthogonal to the optical axis, but they cannot support the other conditions. Thus, for example, when a tomographic image of a tomographic plane not orthogonal to the optical axis is required, it is required to calculate an optical absorption coefficient image of the entire object and then generate a tomographic image. Thus, an optical absorption coefficient of an unnecessary part is calculated, the merits of speed enhancement cannot be sufficiently enjoyed.

Solution to Problem

The present invention was made in view of the above-described problem, and its object is to provide an optical absorption coefficient calculation technique capable of calculating an optical absorption coefficient of any part of an object at high speed.

To solve the above-described problem, an optical absorption coefficient calculation device according to the present invention, the device that calculates, based on transmission projection data acquired on a detection plane of a detector for light beams applied from a light source to an object, an optical absorption coefficient of a specific region of the object, the transmission projection data acquired by relatively rotating the object with respect to an optical axis of the light beams at each rotation angle, includes a global coordinate transform operator determination unit that determines a global coordinate transform operator, which is an operator for transforming a specific coordinate, which is a coordinate in the specific region, into a coordinate in a global coordinate system, a rotational transform operator determination unit that determines a rotational transform operator, which is an operator for transforming the coordinate in the global coordinate system into a coordinate after the relative rotation, a detector coordinate value determination unit that determines a detector coordinate value, which is a coordinate on the detection plane, based on a coordinate acquired by applying the rotational transform operator after applying the global coordinate transform operator to the specific coordinate, a convolution operation unit that performs convolution operation with a filter function on the transmission projection data; and an integration unit that calculates the optical absorption coefficient of the specific coordinate by acquiring a calculated value of the convolution operation calculated based on the transmission projection data of the detector coordinate value for each rotation angle and accumulating the calculated value.

In this structure, with application of the global coordinate transform operator and the rotational transform operator, a specific coordinate in the object after relative rotation (including a rotation angle 0°) can be transformed into a coordinate in the global coordinate system, and furthermore, by the detector coordinate value determination unit, that coordinate can be transformed into a coordinate on the detection plane. That is, with application of these, mapping as to which coordinate on the detector the specific coordinate corresponds to can be made. Thus, calculation equivalent to Equation (2) can be directly performed. With this, an optical absorption coefficient of only a necessary part of the object can be calculated, and thus, compared with the conventional method of generating a tomographic image after calculating optical absorption coefficients of the entire object, calculation of optical absorption coefficients and, furthermore, their imaging can be performed at high speed.

Since the transmission projection data used in the optical absorption coefficient calculation device according to the present invention is acquired while the object is relatively rotated with respect to the optical axis, the rotation axis is required to be set accurately set that rotation axis. As this rotation axis, the axis in a coordinate system set for the object is generally used. However, since it is extremely difficult to precisely install the object, there is a possibility that the coordinate system of the object may be deviated from an assumed ideal coordinate system. In this case, the calculated optical absorption coefficient has an error, which becomes a cause of degradation in image quality.

Thus, in one preferable embodiment of the optical absorption coefficient calculation device according to the present invention, the rotational transform operator determination unit determines the rotational transform operator including an operator that corrects a deviation of a rotation axis of the relative rotation with respect to an assumed coordinate axis, or the like.

In this structure, since the rotational transform operator includes an operator for correcting the deviation of the rotation axis, it is possible to correctly calculate an optical absorption coefficient even if the rotation axis is deviated from an assumed coordinate axis.

In one preferable embodiment of the optical absorption coefficient calculation device according to the present invention, the global coordinate transform operator and the rotational transform operator are square matrixes in a homogeneous coordinate system, and the detector coordinate value determination unit determines the detector coordinate value based on a product of a combined transform matrix calculated by multiplying a right side of the rotational transform operator by the global coordinate transform operator and a vector that represents the specific coordinate in the homogeneous coordinate system.

In this structure, since the global coordinate transform operator and the rotational transform operator are represented as square matrixes, an operator for successively applying these can be represented as a square matrix, which is the product of these. Thus, it is possible to calculate the detector coordinate value by a simple method as the product of a matrix and a vector.

Also, the present invention also covers, as a subject of right, an optical absorption coefficient calculation program that calculates, based on transmission projection data acquired on a detection plane of a detector for light beams applied from a light source to an object, an optical absorption coefficient of a specific region of the object, the transmission projection data is acquired by relatively rotating the object with respect to an optical axis of the light beams for each rotation angle, and the optical absorption coefficient calculation program as described above causes a computer to achieve a global coordinate transform operator determination function that determines a global coordinate transform operator, which is an operator for transforming a specific coordinate, which is a coordinate in the specific region, into a coordinate in a global coordinate system, a rotational transform operator determination function that determines a rotational transform operator, which is an operator for transforming the coordinate in the global coordinate system into a coordinate after the relative rotation, a detector coordinate value determination function that determines a detector coordinate value, which is a coordinate on the detection plane, based on a coordinate acquired by applying the rotational transform operator after applying the global coordinate transform operator to the specific coordinate, a convolution operation function that performs convolution operation with a filter function on the transmission projection data, and an integration function that calculates the optical absorption coefficient of the specific coordinate by acquiring a calculated value of the convolution operation calculated based on the transmission projection data of the detector coordinate value for each rotation angle and accumulating the calculated value.

As a matter of course, also to this optical absorption coefficient calculation program, additional characteristic structures similar to those of the above-described optical absorption coefficient calculation device can be added, exerting similar operations and effects.

Brief Description of Drawings

[Figure 1] A functional block diagram of an optical absorption coefficient calculation device.
[Figure 2] A schematic view of a device that acquires transmission projection data.
[Figure 3] A diagram depicting a relation between a display-image coordinate system and an object coordinate system.
[Figure 4] A diagram depicting an example of a deviation of the rotation axis.
[Figure 5] A diagram depicting a relation between coordinates in a global coordinate system and coordinates in a detector coordinate system.
[Figure 6] A flowchart depicting the flow of process performed in the optical absorption coefficient calculation device.

Description of Embodiments

In the following, an embodiment of an optical absorption coefficient calculation device according to the present invention is described. In the present embodiment, a case is described in which an optical absorption coefficient of a specific region of an object is imaged for display. In the following, this imaged optical absorption coefficient is referred to as a display image, and this specific region is referred to as a display image generation region R. Note that the display image generation region R may be a closed region on a flat plane or on a curved plane or, furthermore, a three-dimensional region. When the display image generation region is a closed region on a flat plane, the display image corresponds to a general tomographic image in CT.

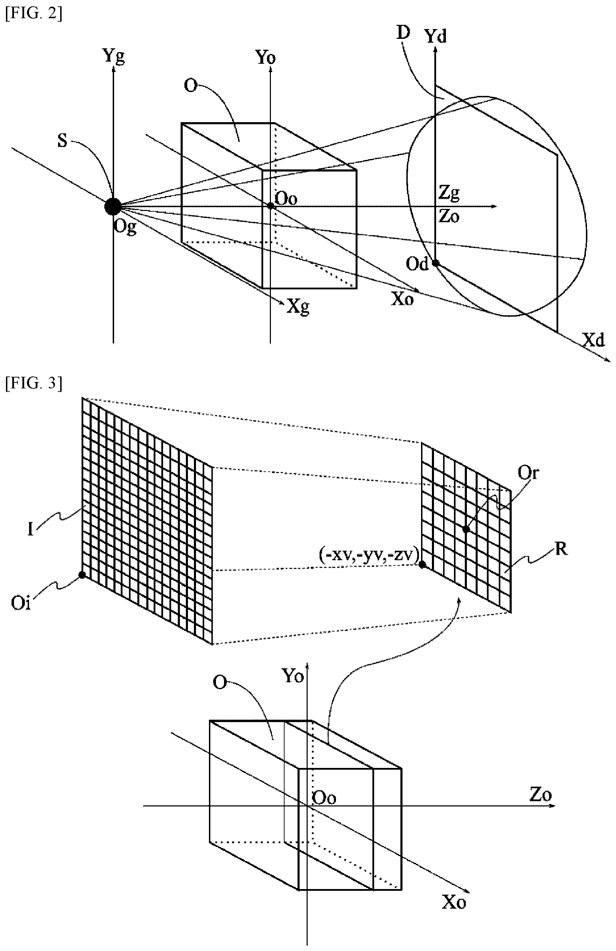

First, prior to description of the optical absorption coefficient calculation device, a device for acquiring (taking an image of) transmission projection data for use in the optical absorption coefficient calculation device and each coordinate system are described by using Figure 2.

As shown in Figure 2, acquisition of transmission projection data is performed by a light source S that applies X rays (corresponding to light beams in the present invention) and a detector D arranged as opposed to the light source to detect X rays. An object O is arranged between the light source S and the detector D. In the present embodiment, X rays applied from the light source S are cone beams, and the detector D is in a plane shape. Note that while the object O is rotated about an Xo axis, which will be described further below, to be relatively rotated with respect to an applying direction (optical axis) of X rays and transmission projection data is imaged from a plurality of directions in the present embodiment, the object O may be fixed and the light source S and the detector D may be rotated about the Xo axis.

For the light source S, a left-handed three-dimensional orthogonal coordinate system (hereinafter referred to as a light-source coordinate system) is set. While this light-source coordinate system is used as a global coordinate system in the present embodiment, a global coordinate system may be separately set. In the light-source coordinate system, a perpendicular line (optical axis) from the light source S toward the detector D is taken as a z axis (hereinafter represented as a Zg axis), and an x axis (hereinafter represented as an Xg axis) and a y axis (hereinafter represented as a Yg axis) orthogonal to the Zg axis are set. Also, the center of applying X rays is taken as an origin Og.

The detector D has a two-dimensional orthogonal coordinate system (hereinafter referred to as a detector coordinate system) set therefor, and an x axis and y axis are represented as an Xd axis and a Yd axis, respectively. The detector D is arranged so that the Xd axis and the Yd axis are parallel to the Xg axis and the Yg axis, respectively. Note that an origin Od of the detector coordinate system is on lower left in the present embodiment.

On the other hand, the object O has also a unique left-handed three-dimensional orthogonal coordinate system (hereinafter referred to as an object coordinate system) set, and an x axis, a y axis, and z axis are represented as an Xo axis, a Yo axis, and a Zo axis, respectively, and its origin is represented as Oo. Note that transmission projection data for use in the present embodiment is one acquired every time the object O is rotated by a predetermined angle by taking the Xo axis as a rotation axis. In the present embodiment, the rotation angle is in N steps from $\theta 1$ (=0°) to $\theta N$ (=180°).

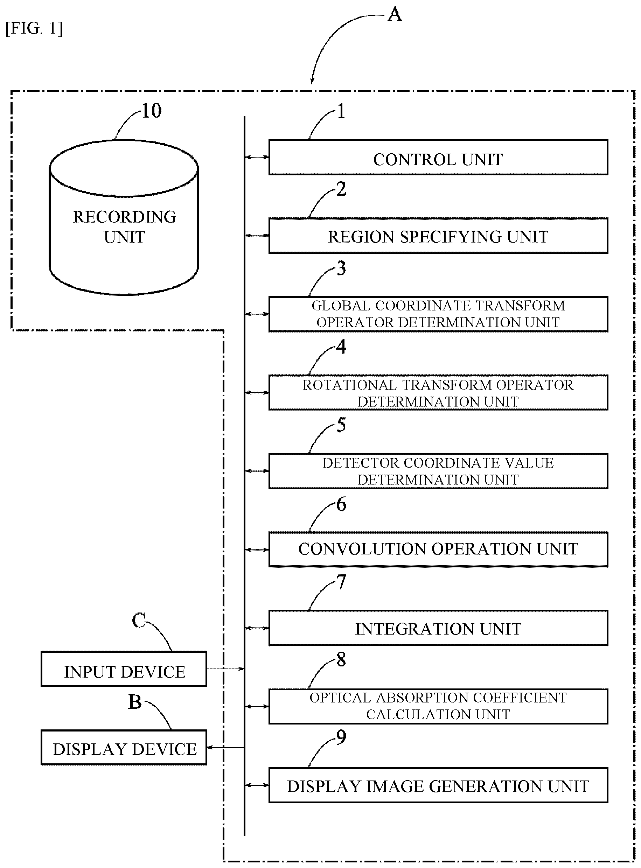

Figure 1 is a functional block diagram of an optical absorption coefficient calculation device A according to the present embodiment. In the present embodiment, the optical absorption coefficient calculation device A is a general-purpose computer, and functional units, which will be described further below, are configured with a read optical absorption coefficient calculation program (software) and hardware in cooperation with each other. As a matter of course, the optical absorption coefficient calculation device A may be configured only by dedicated hardware.

As shown in Figure 1, to the optical absorption coefficient calculation device A, a display device B and an input device C are connected. The display device B is a normal display for use in displaying an object and a display image, and so forth. Also, the input device C is to input an instruction to the optical absorption coefficient calculation device A, and so forth, and a keyboard, mouse, or the like can be used. Note that while a case is described in the present embodiment in which transmission projection data of the object is acquired in advance and stored, it is also possible to directly input and process transmission projection data from the detector.

The optical absorption coefficient calculation device A in the present embodiment includes a control unit 1, a region specifying unit 2, a global coordinate transform operator determination unit 3, a rotational transform operator determination unit 4, a detector coordinate value determination unit 5, a convolution operation unit 6, an integration unit 7, an optical absorption coefficient calculation unit 8, a display image generation unit 9, and a recording unit 10.

The recording unit 10 is a non-volatile recording medium such as an HDD (Hard Disk Drive) or SSD (Solid State Drive), and has recorded therein static data required for process, including transmission projection data of the object acquired in advance.

The control unit 1 is a functional unit that controls an entire flow process, and is configured mainly with a CPU (Central Processing Unit) and software in cooperation with each other.

The region specifying unit 2 is a functional unit that specifies, for the object displayed on the display device B, from information inputted by using the input device C such as a mouse or keyboard, a region for which an optical absorption coefficient of the object O is to be calculated, that is, a display image generation region R.

The global coordinate transform operator determination unit 3 is a functional unit that determines an operator (hereinafter referred to as a global coordinate transform operator) that transforms a coordinate (hereinafter referred to as a display-image coordinate value) in a coordinate system (hereinafter referred to as a display-image coordinate system) of a display image into a coordinate (hereinafter referred to as a global coordinate value) in the global coordinate system.

The rotational transform operator determination unit 4 is a functional unit that determines an operator (hereinafter referred to as a rotational transform operator) that transforms a global coordinate value into a coordinate (hereinafter referred to as a rotation coordinate value) acquired by rotation about Xo.

The detector coordinate value determination unit 5 is a functional unit that determines a coordinate (hereinafter referred to as a detector coordinate value) in the detector coordinate system corresponding to the display-image coordinate value.

The convolution operation unit 6 is a functional unit that performs convolution operation as a filtering process on the transmission projection data. The convolution operation unit 6 is configured mainly of a CPU, a GPU (Graphic Processing Unit), and software in cooperation with one another, thereby allowing high-speed operation to be achieved.

The integration unit 7 is a functional unit that integrates the processing result of the convolution operation unit 6.

The optical absorption coefficient calculation unit 8 is a functional unit that calculates optical absorption coefficients corresponding to all pixels in the display image.

The display image generation unit 9 is a functional unit that generates a display image based on the optical absorption coefficient calculated by the optical absorption coefficient calculation unit 8.

Here, a basic concept of a method of calculating an optical absorption coefficient in the present invention is described. As described above, an optical absorption coefficient of a pixel in a display image is one acquired by integrating a value acquired by subjecting transmission projection data corresponding to the coordinates of that pixel to filtering (convolution) with respect to angle. To calculate this Equation (2), it is required to establish a correspondence between the display-image coordinate value and the detector coordinate value. However, as described above, since the light source S, a display image I, the object O, and the detector D each have a coordinate system set thereto, a direct correspondence cannot be established. To address this, when a function (operator) for transforming a display-image coordinate value into a detector coordinate value is defined as $H(\theta)$, Equation (2) can be rewritten into the following Equation (3). Here, Q is a filtering (convolution) function for transmission projection data of a coordinate of a first argument with a rotation angle of a second argument, and a vector x is a homogeneous coordinate representation of the display-image coordinate value. Also, the first argument of Q is a homogeneous coordinate representation of the detector coordinate value.
[Equation 3]

$$f(\vec{x}) = \int_0^{2\pi} Q(H(\theta)\vec{x}, \theta)d\theta \cdots (3)$$

In the following, a method of determining $H(\theta)$ is described. Figure 3 is a diagram depicting a relation between the display-image coordinate system and the object coordinate system. In the drawing, the display image I and the display image generation region R corresponding to the display image I are depicted. Here, for simplification of description, the display image generation region R is a rectangular region on a plane orthogonal to the Zo axis. Normally, since the display image I is generated in a predetermined size, and the display image generation region R has any size, the size of a pixel in the display-image coordinate system and the size of a pixel in the object coordinate system do not match. In this drawing, the pixels in the display image system are finer. Also, while an origin Oi of the display image I is set on lower left, the origin Or of the display image generation region R is not necessarily on lower left because it depends on the display image generation region R. In this drawing, the origin Or is at the center of the display image generation region R.
Since the display-image coordinate system and the object coordinate system have the relation as described above, an operator V for transforming the display-image coordinate value into a coordinate (hereinafter referred to as an object coordinate value) in the object coordinate system can be represented by translation (origin shift) and scaling (transformation of the size of the pixel). Specifically, if the coordinates of the origin Oi of the display image I in the object coordinate system are taken as (-xv, -yv, - zv) and a ratio of the size of the pixel in each coordinate system is a, the operator V can be represented in matrix form of the following Equation (4). Note in this description that since the display image generation region R is two-dimensional, zv=0.
[Equation 4]

$$\mathbb{V} = \begin{bmatrix} a & 0 & 0 & -xv \\ 0 & a & 0 & -yv \\ 0 & 0 & a & -zv \\ 0 & 0 & 0 & 1 \end{bmatrix} \cdots (4)$$

Therefore, as indicated in the following Equation (5), the display-image coordinate value pi can be transformed into the object coordinate value po with this operator V. Note that vectors pi and po in the equation are homogeneous coordinate representations of the display-image coordinate value pi and the object coordinate value po.
[Equation 5]

$$\vec{po} = \mathbb{V}\vec{pi} \cdots (5)$$

Next, an operator M for transforming the object coordinate value into a global coordinate value is considered. Since the object coordinate system is an orthogonal coordinate system set for the object O, the operator M can be determined by the position and attitude of the object O in the global coordinate system. Here, when it is assumed that three axes in the object coordinate system and three axes in the global coordinate system are respectively parallel and the origin Oo of the object coordinate system is on the Zg axis of the global coordinate system, the operator M translates along the Zg axis. When the coordinates of the origin Oo of the object coordinate system in the global coordinate system are (0, 0, SOD), the operator M is as in the following Equation (6) and, as indicated in Equation (7), the object coordinate value po can be transformed into the global coordinate value pg with the operator M. Note that vectors po and pg in the Equation (7) are homogeneous coordinate representations of the object coordinate value po and the global coordinate value pg.
[Equation 6]

$$\mathbb{M} = \begin{bmatrix} 1 & 0 & 0 & 0 \\ 0 & 1 & 0 & 0 \\ 0 & 0 & 1 & SOD \\ 0 & 0 & 0 & 1 \end{bmatrix} \cdots (6)$$

[Equation 7]

$$\vec{pg} = \mathbb{M}\vec{po} \cdots (7)$$

Substituting Equation (5) in Equation (7) yields the following Equation (8). That is, with the operator V and the operator M, the display-image coordinate value pi can be transformed into the global coordinate value pg.
[Equation 8]

$$\vec{pg} = \mathbb{M}\mathbb{V}\vec{pi} \cdots (8)$$

As described above, acquisition of transmission projection data is performed while rotating the object O about the Xo axis of the object coordinate system by a predetermined angle. Thus, it is required to calculate coordinates of the global coordinate value pg calculated from Equation (8) after rotation. In the following, a rotational transform operator for rotating the global coordinate value pg about the Xo axis by the angle θ is represented as R(θ).
An operator representing rotation of angle θ about the x axis in the left-handed three-dimensional orthogonal space can be represented as
[Equation 9]

$$\begin{bmatrix} 1 & 0 & 0 \\ 0 & \cos\theta & -\sin\theta \\ 0 & \sin\theta & \cos\theta \end{bmatrix} \cdots (9)$$

However, since the origin Oo in the object coordinate system is at a position translated from the origin Og in the global coordinate system, coordinates after rotation in the global coordinate system cannot be calculated with Equation (9). In this case, it is only required to perform operation of matching the origin Oo in the object coordinate system with the origin Og in the global coordinate system, then performing rotation operation about the Xo axis (Xg axis), and returning the origin Oo in the object coordinate system to its original position. Therefore, the rotational transform operator R(θ) is represented as the following Equation (10).
[Equation 10]

$$\mathbb{R}(\theta) = T(0, 0, SOD)R_x(\theta)T(0, 0, -SOD)$$

$$= \begin{bmatrix} 1 & 0 & 0 & 0 \\ 0 & 1 & 0 & 0 \\ 0 & 0 & 1 & SOD \\ 0 & 0 & 0 & 1 \end{bmatrix} \begin{bmatrix} 1 & 0 & 0 & 0 \\ 0 & \cos\theta & -\sin\theta & 0 \\ 0 & \sin\theta & \cos\theta & 0 \\ 0 & 0 & 0 & 1 \end{bmatrix} \begin{bmatrix} 1 & 0 & 0 & 0 \\ 0 & 1 & 0 & 0 \\ 0 & 0 & 1 & -SOD \\ 0 & 0 & 0 & 1 \end{bmatrix} \cdots (10)$$

Here,
[Equation 11]

$$T(x, y, z) = \begin{bmatrix} 1 & 0 & 0 & x \\ 0 & 1 & 0 & y \\ 0 & 0 & 1 & z \\ 0 & 0 & 0 & 1 \end{bmatrix} \cdots (11)$$

However, the rotational transform operator R(θ) can be represented as Equation (10) only when each axis in the object coordinate system is parallel to each axis in the global coordinate system and the origin Oo in the object coordinate system is on the Zg axis in the global coordinate system. This is referred to as an ideal object coordinate system. However, it is difficult to arrange the object coordinate system, that is, the object O, practically in this manner, and a positional deviation of the origin Oo or a deviation of a coordinate axis normally occurs. One with occurrence of these deviations is referred to as an actual object coordinate system.

However, since the former deviation can be construed as translation, and the latter can be construed as rotation, even if these deviations occur, thought can be given in a way similar to the above. That is, rotating operation in the actual object coordinate system about the Xo axis can be achieved by matching the actual object coordinate system with the ideal object coordinate system, applying Equation (10), and then returning to the actual object coordinate system. When an operator performing operation of matching the actual object coordinate system with the ideal object coordinate system is taken as an operator Z, the rotational transform operator R(θ) in general is represented as the following Equation (12).

[Equation 12]

$$\mathbb{R}(\theta) = \mathbb{Z}^{-1} T(0, 0, SOD) R_x(\theta) T(0, 0, -SOD) \mathbb{Z} \cdots (12)$$

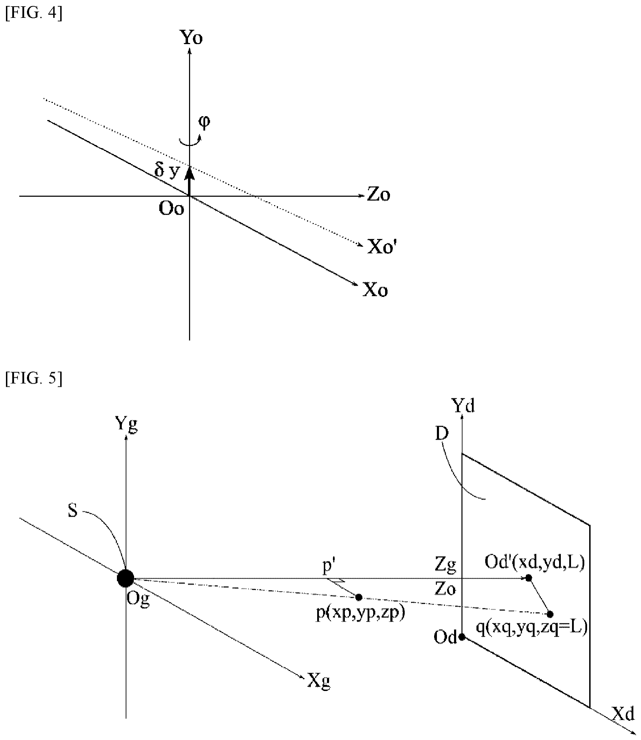

For example, as in Figure 4, consider a case in which the actual object coordinate system has a deviation of δy in a Yo axis direction and a deviation of φ about the Yo axis with respect to the ideal object coordinate system. In the drawing, a solid line represents an Xo axis in the ideal object coordinate system (an example of an assumed coordinate axis in the present invention), and a dotted line represents an Xo axis in the actual object coordinate system (represented as Xo'). Here, the operator Z translates with a magnitude of -δy in the Yo axis direction and rotates with a magnitude of -φ about the Yo axis. That is, the rotational transform operator R(θ) in this case is represented as

[Equation 13]

$$\mathbb{R}(\theta) = T(0, \delta y, 0) R_y(\phi) T(0, 0, SOD) R_x(\theta) T(0, 0, -SOD) R_y(-\phi) T(0, -\delta y, 0) \cdots (13)$$

Here,

[Equation 14]

$$R_y(\phi) = \begin{bmatrix} \cos\phi & 0 & \sin\phi & 0 \\ 0 & 1 & 0 & 0 \\ -\sin\phi & 0 & \cos\phi & 1 \\ 0 & 0 & 0 & 1 \end{bmatrix} \cdots (14)$$

In this manner, a deviation of the actual object coordinate system with respect to the ideal object coordinate system can be represented by translation and rotation. That is, since the operator Z can be determined if the magnitude of deviation is known, the rotational transform operator R(θ) can be represented as Equation (13). With this, a coordinate (rotation coordinate value) pg' in the global coordinate system after the global coordinate value pg is rotated by an angle θ about the Xo axis in the object coordinate system is

[Equation 15]

$$\vec{pg'} = \mathbb{R}(\theta)\vec{pg} \cdots (15)$$

and substituting Equation (8) in this yields

[Equation 16]

$$\vec{pg\prime} = \mathbb{R}(\theta)\mathbb{M}\mathbb{V}\vec{pi} \cdots (16)$$

Next, consider a coordinate q on a detection plane of the detector D where X rays passing through a coordinate p in the global coordinate system are detected. Note herein that the coordinates p and q are coordinates in the global coordinate system. Figure 5 is a diagram depicting a relation between the point p and the point q. As shown in the drawing, the coordinates p and q are taken as (xp, yp, zp) and (xq, yq, zq), respectively, and a coordinate of a point of intersection of a perpendicular line drawn from the coordinate p to the Zg axis and the Zg axis is taken as p' and a coordinate of a point of intersection of the detection plane of the detector D and the Zg axis is taken as Od', a triangle Og-p-p' and a triangle Og-q-Od' are similar in shape. Here, since zq=L when a distance from the light source S to the detector D (Source-to-Image Distance: SID) is taken as L, the triangle Og-q-Od' has a size L/zp times larger than that of the triangle Og-p-p'. That is, [Equation 17]

$$\vec{q} = \frac{L}{zp}\vec{p} \cdots (17)$$

However, since the coordinate q calculated with Equation (17) is one in the global coordinate system, this is required to be transformed into a coordinate (detector coordinate value) in the detector coordinate system. Since the global coordinate system and the detector coordinate system have a deviation in the position of the origin, this transformation is translation, Specifically, when the coordinate of Od' is taken as (xd, yd, L), a detector coordinate value pd is [Equation 18]

$$\vec{pd} = \frac{L}{zp}\vec{p} + \begin{bmatrix} xd \\ yd \\ 0 \end{bmatrix} \cdots (18)$$

Note that while scaling is further required when the size of the pixel in the global coordinate system and the size of the pixel in the detector coordinate system are different, it is assumed that the size of the pixels herein are taken as the same and scaling is not required.

Here, an operator (function) for transforming a global coordinate value represented by Equation (18) into a detector coordinate value is represented as P(), the display image coordinate value pi can be transformed into a detector coordinate value pd with the following Equation (19).
[Equation 19]

$$\vec{pd} = P(\mathbb{R}(\theta)\mathbb{M}\mathbb{V}\vec{pi}) \cdots (19)$$

Therefore, when P is a matrix representation, H(θ) is represented as the following Equation (20). Note that while P is expressed as a matrix representation for convenience, in practical calculation, the calculation amount can be reduced more by calculating with Equation (18) than with matrix form.
[Equation 20]

$$H(\theta) = \mathbb{P}\mathbb{R}(\theta)\mathbb{M}\mathbb{V} \cdots (20)$$

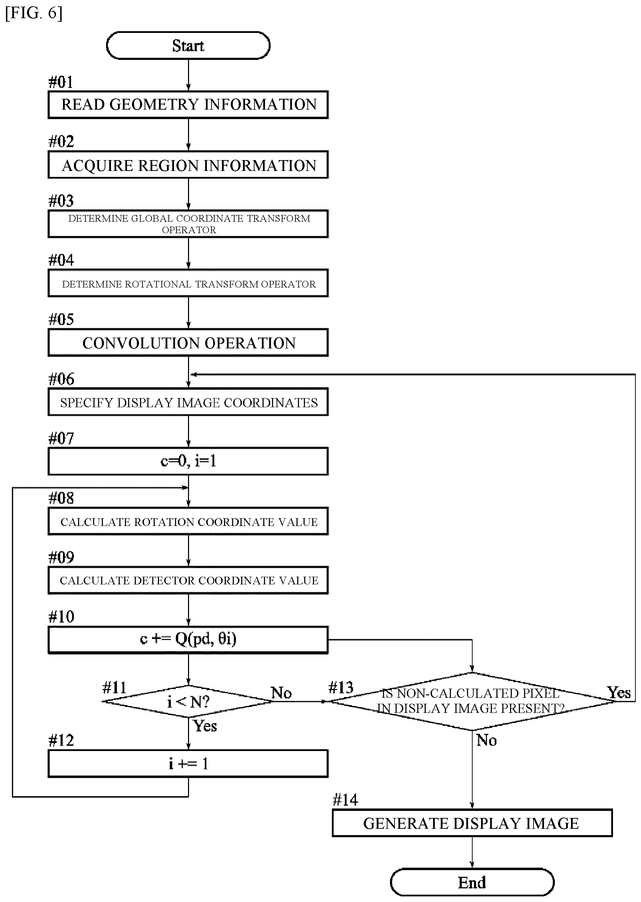

Next, by using a flowchart of Figure 6, a flow of process of the optical absorption coefficient calculation device A in the present embodiment is described. Firstly, the control unit 1 reads from the recording unit 10 geometry information when transmission projection data of the object O is imaged (#01). The geometry information is, for example, the distance L (Source-to-Image Distance: SID) from the light source S to the detector D, the coordinate of the origin Oo of the object coordinate system in the global coordinate system, a deviation of the coordinate axis Xo with respect to the coordinate axis Xg, and so forth.

Next, the control unit 1 causes the outer shape of the object to be displayed on the display device B, and acquires information (hereinafter referred to as region information) specifying the display image generation region R specified by the operation of the input device C by a user (#02). As region information, for example, when the display image generation region R is a plane, the normal direction, the center coordinate, the size, and so forth in the object coordinate system can be used. As a matter of course, other information capable of specifying the region can be used. The geometry information and the region information are temporarily stored in a volatile storage medium such as a RAM (Random Access Memory).

Also, a property such as the size of the display image is set based on the region information and an input from the user. Specifically, the display image is in the same dimension as the display image generation region R, and their aspect ratios are also equal. Here, the number of pixels in each axial direction is defined so that the number of pixels of the display image on the longest side is a maximum number of pixels set in advance or inputted from the user.

When a display image generation instruction is inputted from the input device C, the control unit 1 instructs the global coordinate transform operator determination unit 3 to determine a global coordinate transform operator. The global coordinate transform operator determination unit 3 determines a global coordinate transform operator by the following process (#03). Specifically, the global coordinate transform operator determination unit 3 determines the product of M and V represented by the above-described Equations (4) and (6) as a global coordinate transform operator.

Next, the control unit 1 instructs the rotational transform operator determination unit 4 to determine a rotational transform operator. Specifically, the rotational transform operator determination unit 4 determines the rotational transform operator $R(\theta)$ represented by the above-described Equation (12) (#04). Note that when the actual object coordinate system is not deviated from the ideal object coordinate system, the operator Z is a unit matrix.

Next, the control unit 1 instructs the convolution operation unit 6 to perform convolution operation on the transmission projection data, and the convolution operation unit 6 performs convolution operation on each piece of the transmission projection data (#05). Specifically, the convolution operation unit 6 performs convolution operation by acquiring from the recording unit 10 transmission projection data of coordinates $(x, y)$ at the rotation angle $\theta$ and transmission projection data required for convolution operation. Note that this convolution operation is similar to that in normal convolution integral method and therefore its details are omitted. The convolution operation unit 6 performs this convolution operation on all coordinate positions and rotation angles, and causes the calculation results to be stored in a RAM or the like in arrangement form defined by (coordinate, angle). This calculated value corresponds to the function Q() in Equation (3).

Note that when convolution operation is performed on the transmission projection data at all coordinate positions, there is a possibility of performing operation also on data not contributing to generation of the display image. To avoid this unnecessary operation, it is only required that the coordinates of data contributing to generation of the display image are specified based on the region information and convolution operation is performed only on data at the specified coordinate positions.

When convolution operation is completed in this manner, the control unit 1 instructs the optical absorption coefficient calculation unit 8 to calculate optical absorption coefficients corresponding to all pixels of the display image. The optical absorption coefficient calculation unit 8 calculates optical absorption coefficients by the following process.

Firstly, the optical absorption coefficient calculation unit 8 specifies one coordinate (display image coordinate value pi) in the display image (#06), and notifies the integration unit 7 of this display image coordinate value pi. Note that, in the present embodiment, this display image coordinate value pi corresponds to a specific coordinate in the present invention.

The integration unit 7 notified of the display image coordinate value pi first initializes an optical absorption coefficient c with 0 and initializes an index i of the rotation angle with 1 (#07). Then, a global coordinate transform operator MV and a rotational transform operator $R(\theta i)$ are applied to the display image coordinate value pi to calculate a rotation coordinate value pg' (#08). Specifically, calculation in Equation (16) is performed, and the calculation amount can be reduced by calculating $R(\theta i)MV$ in advance and storing it as one square matrix. Note that a matrix acquired from this $R(\theta i)MV$ corresponds to a combined transform matrix.

Next, the integration unit 7 calculates the detector coordinate value pd from the rotation coordinate value pg' in this manner (#09). Specifically, in Equation (18), with p=pg', the detector coordinate value pd is calculated. Then, a convolution operation value $Q(pd, \theta i)$ specified by the detector coordinate value pd and the rotation angle $\theta i$ is added to the optical absorption coefficient c (#10). The integration unit 7 repeats this process until i reaches N (#08 to #12). With this, calculation in Equation (3) is achieved.

Upon completing calculation of an optical absorption coefficient for one display image coordinate value pi, the optical absorption coefficient calculation unit 8 determines whether any pixel for which calculation of an optical absorption coefficient is not completed is present in the display image (#13) and, when a pixel for which calculation is not performed is present (Yes branch at #13), the process is returned to #06 to specify the next non-calculated display image coordinate value pi (#06) to perform the above-described process.

On the other hand, when calculation of optical absorption coefficients for all pixels in the display image is completed (No branch at #13), the control unit 1 instructs the display image generation unit 9 to generate a display image. The display image generation unit 9 receiving this instruction generates a display image based on the optical absorption coefficient corresponding to each pixel (#14). Generation of the display image can be achieved by, for example, normalizing the optical absorption coefficient by 255. The display image generated in this manner is displayed on the display device D.

In this manner, in the optical absorption coefficient calculation device A according to the present invention, since the optical absorption coefficient can be calculated in units of pixels of the display image, it is possible to calculate an optical absorption coefficient of only a necessary part. With this, calculation for an unnecessary part can be reduced, and calculation of an optical absorption coefficient and generation of a display image can be performed at high speed.

[Other embodiments]

(1) While the optical absorption coefficient corresponding to the pixel of the display image is calculated in the above-described embodiment, it is possible to also calculate an optical absorption coefficient of a voxel in the object coordinate system and calculate an optical absorption coefficient of a pixel of the display image from the optical absorption coefficient of that voxel.
(2) While convolution operation is performed in advance and integration is performed by using that operation result in the above-described embodiment, convolution operation can be performed at the time of integration.
(3) While the global coordinate transform operator, the rotational transform operator, and so forth are in matrix form in the above-described embodiment, they are not restricted to this, and may be represented in another form such as a functional format.

Industrial Applicability

The present invention can be used for a technology for use in medical care and industries for calculating an optical absorption coefficient of an object from transmission projection data acquired by applying X rays to the object.

Reference Signs List

A: optical absorption coefficient calculation device
D: detector
I: display image
O: object
pi: display-image coordinate value
po: object coordinate value
pg: global coordinate value
pg': rotation coordinate value
pd: detector coordinate value
R: display image generation region
S: optical source
1: control unit
2: region specifying unit
3: global coordinate transform operator determination unit
4: rotational transform operator determination unit
5: detector coordinate value determination unit
6: convolution operation unit
7: integration unit
8: optical absorption coefficient calculation unit
9: display image generation unit
10: recording unit

**Claims**

1. An optical absorption coefficient calculation device that calculates, based on transmission projection data acquired on a detection plane of a detector for light beams applied from a light source to an object, an optical absorption coefficient of a specific region of the object,
wherein the transmission projection data is acquired by relatively rotating the object with respect to an optical axis of the light beams for each rotation angle, the optical absorption coefficient calculation device comprising:

a global coordinate transform operator determination unit that determines a global coordinate transform operator, which is an operator for transforming a specific coordinate, which is a coordinate in the specific region, into a coordinate in a global coordinate system;

a rotational transform operator determination unit that determines a rotational transform operator, which is an operator for transforming the coordinate in the global coordinate system into a coordinate after the relative rotation;

a detector coordinate value determination unit that determines a detector coordinate value, which is a coordinate on the detection plane, based on a coordinate acquired by applying the rotational transform operator after applying the global coordinate transform operator to the specific coordinate;

a convolution operation unit that performs convolution operation with a filter function on the transmission projection data; and

an integration unit that calculates the optical absorption coefficient of the specific coordinate by acquiring a calculated value of the convolution operation calculated based on the transmission projection data of the detector coordinate value for each rotation angle and accumulating the calculated value.

2. The optical absorption coefficient calculation device according to claim 1, wherein the rotational transform operator determination unit determines the rotational transform operator including an operator that corrects a deviation of a rotation axis of the relative rotation with respect to an assumed coordinate axis.

3. The optical absorption coefficient calculation device according to claim 1 or 2, wherein the global coordinate transform operator and the rotational transform operator are square matrixes in a homogeneous coordinate system, and the detector coordinate value determination unit determines the detector coordinate value based on a product of a combined transform matrix calculated by multiplying a right side of the rotational transform operator by the global coordinate transform operator and a vector that represents the specific coordinate in the homogeneous coordinate system.

4. An optical absorption coefficient calculation program that calculates, based on transmission projection data acquired on a detection plane of a detector for light beams applied from a light source to an object, an optical absorption coefficient of a specific region of the object,

wherein the transmission projection data is acquired by relatively rotating the object with respect to an optical axis of the light beams for each rotation angle, the optical absorption coefficient calculation program causing a computer to achieve:

a global coordinate transform operator determination function that determines a global coordinate transform operator, which is an operator for transforming a specific coordinate, which is a coordinate in the specific region, into a coordinate in a global coordinate system;

a rotational transform operator determination function that determines a rotational transform operator, which is an operator for transforming the coordinate in the global coordinate system into a coordinate after the relative rotation;

a detector coordinate value determination function that determines a detector coordinate value, which is a coordinate on the detection plane, based on a coordinate acquired by applying the rotational transform operator after applying the global coordinate transform operator to the specific coordinate;

a convolution operation function that performs convolution operation with a filter function on the transmission projection data; and

an integration function that calculates the optical absorption coefficient of the specific coordinate by acquiring a calculated value of the convolution operation calculated based on the transmission projection data of the detector coordinate value for each rotation angle and accumulating the calculated value.

[FIG. 1]

A

10

RECORDING
UNIT

1

CONTROL UNIT

2

REGION SPECIFYING UNIT

3

GLOBAL COORDINATE TRANSFORM
OPERATOR DETERMINATION UNIT

4

ROTATIONAL TRANSFORM OPERATOR
DETERMINATION UNIT

5

DETECTOR COORDINATE VALUE
DETERMINATION UNIT

6

CONVOLUTION OPERATION UNIT

7

INTEGRATION UNIT

C

INPUT DEVICE

8

OPTICAL ABSORPTION COEFFICIENT
CALCULATION UNIT

B

DISPLAY DEVICE

9

DISPLAY IMAGE GENERATION UNIT

[FIG. 2]

[FIG. 3]

[FIG. 4]

[FIG. 5]

[FIG. 6]

```
                         ( Start )
                             │
   #01                       ▼
         ┌───────────────────────────────────────┐
         │      READ GEOMETRY INFORMATION         │
         └───────────────────────────────────────┘
                             │
   #02                       ▼
         ┌───────────────────────────────────────┐
         │      ACQUIRE REGION INFORMATION        │
         └───────────────────────────────────────┘
                             │
   #03                       ▼
         ┌───────────────────────────────────────┐
         │  DETERMINE GLOBAL COORDINATE TRANSFORM │
         │               OPERATOR                 │
         └───────────────────────────────────────┘
                             │
   #04                       ▼
         ┌───────────────────────────────────────┐
         │  DETERMINE ROTATIONAL TRANSFORM OPERATOR│
         └───────────────────────────────────────┘
                             │
   #05                       ▼
         ┌───────────────────────────────────────┐
         │        CONVOLUTION OPERATION           │
         └───────────────────────────────────────┘
                             │
   #06                       ▼
         ┌───────────────────────────────────────┐
         │    SPECIFY DISPLAY IMAGE COORDINATES   │
         └───────────────────────────────────────┘
                             │
   #07                       ▼
         ┌───────────────────────────────────────┐
         │              c=0, i=1                  │
         └───────────────────────────────────────┘
                             │
   #08                       ▼
         ┌───────────────────────────────────────┐
         │   CALCULATE ROTATION COORDINATE VALUE  │
         └───────────────────────────────────────┘
                             │
   #09                       ▼
         ┌───────────────────────────────────────┐
         │   CALCULATE DETECTOR COORDINATE VALUE  │
         └───────────────────────────────────────┘
                             │
   #10                       ▼
         ┌───────────────────────────────────────┐
         │           c += Q(pd, θi)               │
         └───────────────────────────────────────┘
```

#10  $c \mathrel{+}= Q(pd, \theta i)$

#11  $i < N?$   No

#12  $i \mathrel{+}= 1$   Yes

#13  IS NON-CALCULATED PIXEL IN DISPLAY IMAGE PRESENT?   Yes / No

#14  GENERATE DISPLAY IMAGE

( End )

# INTERNATIONAL SEARCH REPORT

| International application No. |
| --- |
| **PCT/JP2024/004999** |

| A. | CLASSIFICATION OF SUBJECT MATTER |
| --- | --- |

*G01N 23/046*(2018.01)i; *G01N 23/083*(2018.01)i
FI: G01N23/046; G01N23/083

According to International Patent Classification (IPC) or to both national classification and IPC

| B. | FIELDS SEARCHED |
| --- | --- |

Minimum documentation searched (classification system followed by classification symbols)

A61B6/03; G01N23/00-G01N23/2276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2005-326332 A (SONY CORPORATION) 24 November 2005 (2005-11-24)<br>paragraphs [0021]-[0120], fig. 6-22 | 1-4 |
| X | JP 2005-331428 A (SONY CORPORATION) 02 December 2005 (2005-12-02)<br>paragraphs [0010]-[0013], [0023], [0030]-[0103], fig. 6-14 | 1-4 |
| X | JP 2019-158534 A (MITSUTOYO CORP.) 19 September 2019 (2019-09-19)<br>paragraphs [0047]-[0084], fig. 1-22 | 1-4 |
| X | JP 2014-139533 A (SHIMADZU CORPORATION) 31 July 2014 (2014-07-31)<br>paragraphs [0024]-[0083], fig. 1-9 | 1-4 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 March 2024** | **26 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/004999** |

| Patent document cited in search report | | | Publication date (day/month/year) | Patent family member(s) | Publication date (day/month/year) |
|---|---|---|---|---|---|
| JP | 2005-326332 | A | 24 November 2005 | (Family: none) | |
| JP | 2005-331428 | A | 02 December 2005 | US 2005/0272993 A1<br>paragraphs [0012]-[0015],<br>[0025], [0047]-[0138], fig. 1-9 | |
| JP | 2019-158534 | A | 19 September 2019 | US 2019/0274654 A1<br>paragraphs [0072]-[0117], fig.<br>1-22<br>DE 102019001334 A1<br>CN 110261416 A | |
| JP | 2014-139533 | A | 31 July 2014 | US 2014/0205058 A1<br>paragraphs [0048]-[0120], fig.<br>4-12<br>CN 103940835 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003245276 A

- JP 2007068717 A